# EUROPÄISCHE PATENTSCHRIFT

(11) **EP 0 996 257 B1**
(45) Veröffentlichungstag und Bekanntmachung des Hinweises auf die Patenterteilung: **06.06.2007**
(21) Anmeldenummer: 99203353.0
(22) Anmeldetag: 12.10.1999
(51) Int. Cl.: H04L 12/46

(54) **Netzwerk mit Brücken-Terminal zur Übertragung von Daten zwischen mehreren Sub-Netzwerken**
Network with terminal bridges for data transmission between a plurality of subnetworks
Réseau avec des terminaux-pont pour la transmission de données entre plusieurs sous-réseaux

(30) Priorität: 21.10.1998 DE 19848340
(43) Veröffentlichungstag der Anmeldung: 26.04.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yonggang, Philips Corporate Intel. Prop. GmbH, 52064 Aachen (DE); Herrmann, Christoph, Philips Corp. Intel.Prop.GmbH, 52064 Aachen (DE); May, Klaus Peter, Philips Corp. Intel. Prop. GmbH., 52064 Aachen (DE)
(74) Vertreter: Volmer, Georg

(56) Entgegenhaltungen:
- EP-A- 0 483 547
- DE-A1- 19 637 026
- DE-C1- 19 639 845
- US-A- 5 331 634
- US-A- 5 673 031

## Beschreibung

Die Erfindung bezieht sich auf ein Brücken-Terminal in einem lokalen Netzwerk. Das Brücken-Terminal ist zur Übertragung von Daten zwischen den Terminals von wenigstens zwei Sub-Netzwerken über ein drahtloses Medium vorgesehen ist. Weiter bezieht sich die Erfindung auf ein lokales Netzwerk mit mindestens einem Brücken-Terminal.

Ein solches lokales Netzwerk mit mehreren Sub-Netzwerken ist aus der DE 196 37 026 A 1 bekannt. Ein Sub-Netzwerk enthält mehrere Terminals, die über ein Funkübertragungsmedium (drahtloses Medium) nach dem asynchronen Transfermodus erzeugte Zellen austauschen. Daten zwischen zwei Sub-Netzwerken werden über ein Brücken-Terminal übertragen. Wie die Daten in einem solchen Brücken-Terminal verarbeitet werden, wird in dem genannten Dokument nicht näher beschrieben.

US 5,331,634 beschreibt eine Anordnung mit mehreren LAN-Segmenten, die jeweils über einen Communicator verfügen: Der Communicator kann drahtlos mit anderen Communicatoren kommunizieren. Daten, die von einem anderen Communicator empfangen wurden bzw. an einen anderen gesendet werden sollen, werden in einer Warteschleife abgelegt.

DE 196 39 845 C1 beschreibt ein lokales Netzwerk mit Sende- und Empfangsvorrichtungen, die als Netzwerkschnittstellen und als Terminals ausgebildet sind. Die Netzwerkschnittstellen sind über einen Ring gekoppelt. Eine Sende- und Empfangsvorrichtung mit Netzwerkschnittstelle weist n-1 Pufferspeicher auf, wobei n die Anzahl der dieser Sende- und Empfangsvorrichtung zugeordneten Terminals ist.

Der Erfindung liegt die Aufgabe zugrunde, ein kostengünstiges Brücken-Terminal zur Verbindung von wenigstens zwei Sub-Netzwerken in einem lokalen Netzwerk zu schaffen.

Die Aufgabe wird durch die Merkmale der unabhängigen Ansprüche gelöst.

Erfindungsgemäss ist das Brücken-Terminal nur mit einem Sub-Netzwerk während eines Zeitabschnittes zum Datenaustausch verbunden. Daten für ein anderes Sub-Netzwerk werden in einer Zwischenspeichervorrichtung abgelegt und erst dann ausgelesen, wenn das Brücken-Terminal während eines folgenden Zeitabschnittes mit dem anderen Sub-Netzwerk verbunden ist. Ein Brücken-Terminal so auszugestalten, dass immer nur ein Sub-Netzwerk mit dem Brücken-Terminal verbunden ist, bedeutet die Vermeidung weiterer Bauelemente. Die Daten, welche im lokalen Netzwerk übertragen werden, können z.B. nach einem Paketübertragungsverfahren erzeugt sein. Die Pakete können insgesamt oder als Teilpakete nach Hinzufügung weiterer Informationen über das drahtlose Medium übertragen werden. Unter einer drahtlosen Übertragung ist eine Funk-, Infrarot-, Ultraschallübertragung etc. zu verstehen. Als Paketübertragungsverfahren kann beispielsweise der asynchrone Transfermodus (ATM) angewendet werden, der Pakete fester Länge erzeugt, die Zellen genannt werden.

Anspruch 2 gibt den Ausleseprozess aus der Zwischenspeichervorrichtung an. Die Daten werden aus der Zwischenspeichervorrichtung in der Reihenfolge des Einschreibens ausgelesen.

In Anspruch 3 wird der Ablauf der Beendigung und des Beginns einer Verbindung des Brücken-Terminals mit zwei unterschiedlichen Sub-Netzwerken beschrieben.

Das Brücken-Terminal kann nicht nur mit zwei Sub-Netzwerken Daten austauschen. Die Bedingungen für einen Datenaustausch mit M Sub-Nerzwerken (M ∈ N, M ≥ 2) zeigt Anspruch 4.

Den Aufbau eines Brücken-Terminals gibt Anspruch 6 an.

Ein Brücken-Terminal, das mit unterschiedlichen Trägerfrequenzen arbeitet, zeigt Anspruch 7.

Die Erfindung bezieht sich des Weiteren auch auf ein lokales Netzwerk mit wenigstens einem oben beschriebenen Brücken-Terminal.

Ausführungsbeispiele der Erfindung werden nachstehend anhand der Figuren näher erläutert. Es zeigen:
- Fig. 1: ein lokales Netzwerk mit drei Sub-Netzwerken, die jeweils zur Funkübertragung vorgesehene Terminals enthalten,
- Fig. 2: ein Terminal des lokalen Netzwerks nach Fig. 1,
- Fig. 3: eine Funkvorrichtung des Terminals nach Fig. 2,
- Fig. 4 und 5: zwei Ausführungen eines zur Verbindung von zwei Sub-Netzwerken vorgesehenen Brücken-Terminals,
- Fig. 6: ein Diagramm zur Erläuterung des zeitlichen Ablaufs der Synchronisation eines Brücken-Terminals nach Fig. 5 mit zwei Sub-Netzwerken und
- Fig. 7 bis 9: mehrere Sub-Netzwerke, die über Brücken-Terminals verbunden sind und nicht erwünschte Schleifen bilden.

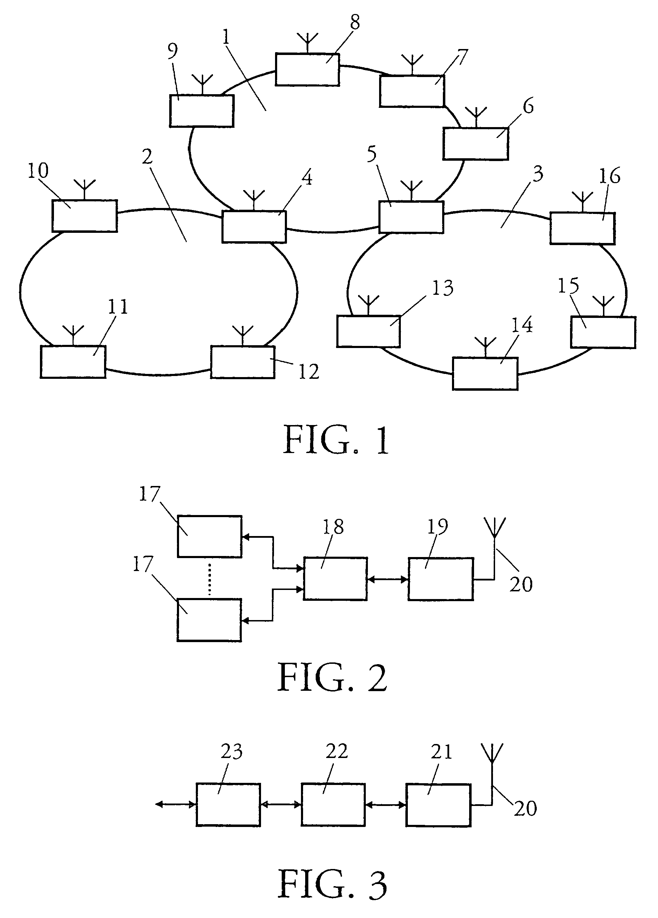

In Fig. 1 ist ein Ausführungsbeispiel eines nach dem asynchronen Transfermodus (ATM) arbeitenden, lokalen Netzwerks mit drei Sub-Netzwerken 1 bis 3 dargestellt, die jeweils mehrere Terminals 4 bis 16 enthalten. Bestandteil des Sub-Netzwerks 1 sind die Terminals 4 bis 9, des Sub-Netzwerks 2 die Terminals 4 und 10 bis 12 und des Sub-Netzwerks 3 die Terminals 5 und 13 bis 16. In einem Sub-Netzwerk tauschen die jeweils zu einem Sub-Netzwerk gehörenden Terminals Daten über Funkstrecken aus. Die in Fig. 1 eingezeichneten Ellipsen geben den Funkbereich eines Sub-Netzwerks (1 bis 3) an, in dem zwischen den zu dem Sub-Netzwerk gehörenden Terminals eine weitgehend problemlose Funkübertragung möglich ist.

Die Terminals 4 und 5 werden Brücken-Terminals genannt, weil diese einen Datenaustausch zwischen zwei Sub-Netzwerken 1 und 2 bzw. 1 und 3 ermöglichen. Das Brücken-Terminal 4 ist für den Datenverkehr zwischen den Sub-Netzwerken 1 und 2 und das Brücken-Terminal 5 für den Datenverkehr zwischen den Sub-Netzwerken 1 und 3 zuständig.

Ein Sub-Netzwerk 1 bis 3 des lokalen Netzwerks kann beispielsweise ein Adhoc-Netzwerk sein, welches durch über Funkstrecken verbundene Terminals von um einen Tisch sitzenden Teilnehmern gebildet wird. Solche Terminals können z.B. Kommunikationsvorrichtungen zum drahtlosen Austausch von Dokumenten, Bildern usw. sein. Ein Adhoc-Netzwerk ist dadurch gekennzeichnet, daß die Struktur und die Anzahl von Teilnehmern innerhalb vorgegebener Grenzwerte nicht festgelegt ist. Beispielsweise kann eine Kommunikationsvorrichtung eines Teilnehmers aus dem Netzwerk genommen oder eingebunden werden.

Ein Terminal 4 bis 16 des lokalen Netzwerks nach Fig. 1 kann eine mobile oder feste Kommunikationsvorrichtung sein und enthält beispielsweise mindestens eine Station 17, eine Verbindungskontrollvorrichtung 18 und eine Funkvorrichtung 19 mit Antenne 20, wie dies Fig. 2 zeigt. Eine Station 17 kann beispielsweise ein tragbarer Computer, Fernsprecher usw. sein. Die Verbindungskontrollvorrichtung 18 ist z.B. aus dem Dokument DE 196 39 845 C1 bekannt und dient zur Vermittlung von ATM-Verbindungen (virtuelle Verbindungen) und zur Verteilung von ATM-Zellen. Eine Zelle enthält typischerweise ein Kopffeld mit 5 Byte und ein Informationsfeld mit 48 Byte. Die im Kopffeld der Zelle enthaltenen Informationen dienen insbesondere zur Adressierung und zur Durchführung von Vermittlungsfunktionen. Zellen können von einer in der Verbindungskontrollvorrichtung 18 enthaltenen Steueranordnung und von einer Station 17 erzeugt und von der Funkvorrichtung 19 empfangen werden.

Eine virtuelle Verbindung, die beispielsweise eine Station 17 eines ersten Terminals mit einer Station 17 eines zweiten Terminals wünscht, wird jeweils von den Verbindungskontrollvorrichtungen 18 des ersten und zweiten Terminals aufgebaut. Hier liegt dann eine Einzel-Verbindung vor. Bei einer Einzel-Verbindung (unicast connection) oder Ende-zu-Ende-Verbindung besteht eine virtuelle Verbindung eines Anwenders (z.B. ein auf einem tragbaren Computer laufendes Programm) eines ersten Terminals mit einem Anwender (z.B. Datenbank, auf welche das Programm zugreift) eines zweiten Terminals. Es sind noch zwei weitere Verbindungsarten zu unterscheiden. Bei einer Mehrfach-Verbindung (multicast connection) oder Punkt-zu-Multipunkt-Verbindung sind mehrere Anwender von Terminals miteinander verbunden. Falls eine Verteil-Verbindung (broadcast connection) vorliegt, liefert ein Anwender eines Terminal an alle anderen Anwender der Terminals Zellen mit gleichem Inhalt im Informationsfeld.

Eine Funkvorrichtung 19 der Terminals 6 bis 16 ist ebenfalls aus dem Dokument DE 196 39 845 C1 bekannt und enthält, wie Fig. 3 zeigt, außer der Antenne 20 eine Hochfrequenzschaltung 21, ein Modem 22 und eine Protokollvorrichtung 23. Die Protokollvorrichtung 23 bildet aus dem von der Verbindungskontrollvorrichrung 18 empfangenen ATM-Zellenstrom Paketeinheiten. Eine Paketeinheit enthält mindestens Teile einer ATM-Zelle und zusätzliche von der Protokollvorrichtung 23 gebildete Steuerinformationen. Die Protokollvorrichtung verwendet Protokolle für die LLC-Schicht (LLC = Logical Link Control) und die MAC-Schicht (MAC = Medium Access Control). Die MAC-Schicht steuert den Mehrfachzugriff eines Terminals zum Funkübertragungsmedium und die LLC-Schicht führt eine Fluß- und Fehlerkontrolle durch.

In einem Sub-Netzwerk 1 bis 3 ist ein bestimmtes Terminal zuständig für die Kontroll- und Managementfunktionen und wird als Controller bezeichnet. Der Controller arbeitet außerdem als normales Terminal im zugehörigen Sub-Netzwerk aus, wie dies beispielsweise in der DE 196 39 845 C1 beschrieben ist. Der Controller ist z.B. für die Registrierung von Terminals, die den Betrieb im Sub-Netzwerk aufnehmen, für den Verbindungsaufbau zwischen wenigstens zwei Terminals im Funkübertragungsmedium, für die Resourcenverwaltung und für die Zugriffssteuerung im Funkübertragungsmedium zuständig. So erhält beispielsweise ein Terminal eines Sub-Netzwerks nach der Registrierung und nach der Anmeldung eines Übertragungswunsches vom Controller Übertragungskapazität für Daten (Paketeinheiten) zugewiesen.

In dem lokalen Netzwerk können die Daten zwischen den Terminals nach einem TDMA-, FDMA- oder CDMA-Verfahren (TDMA = Time Division Multiplex Access, FDMA = Frequency Division Multiplex Access, CDMA = Code Division Multiplex Access) ausgetauscht werden. Die Verfahren können auch kombiniert werden. Jedem Sub-Netzwerk 1 bis 3 des lokalen Netzwerks sind eine Anzahl von bestimmten Kanälen zugeordnet, die als Kanalbündel bezeichnet werden. Ein Kanal ist durch einen Frequenzbereich, einen Zeitbereich und z.B. beim CDMA-Verfahren durch einen Spreizungscode bestimmt. Beispielsweise kann jedem Sub-Netzwerk 1 bis 3 zum Datenaustausch ein bestimmter, jeweils unterschiedlicher Frequenzbereich von fᵢ - - Δfᵢ/2 bis fᵢ + Δfᵢ/2 zur Verfügung stehen, wobei fᵢ die Trägerfrequenz und Δfᵢ die Bandbreite ist. In einem solchen Frequenzbereich können beispielsweise Daten mittels des TDMA-Verfahrens übertragen werden. Dabei kann dem Sub-Netzwerk 1 die Trägerfrequenz f₁ und die Bandbreite Δf₁, dem Sub-Netzwerk 2 die Trägerfrequenz f₂ und die Bandbreite Δf₂ und dem Sub-Netzwerk 3 die Trägerfrequenz f₃ und die Bandbreite Δf₃ zugewiesen werden. Das Brücken-Terminal 4 arbeitet einerseits, um mit den anderen Terminals des Sub-Netzwerks 1 einen Datenaustausch durchführen zu können, im Frequenzbereich von f₁ - Δf₁/2 bis f₁ + Δf₁/2 und andererseits, um mit den anderen Terminals des Sub-Netzwerks 2 einen Datenaustausch durchführen zu können, im Frequenzbereich von f₂ - Δf₂/2 bis f₂ + Δf₂/2. Das zweite im lokalen Netzwerk enthaltene Brücken-Terminal 5, welches Daten zwischen den Sub-Netzwerken 1 und 3 überträgt, arbeitet einerseits im Frequenzbereich von f₁ - Δf₁/2 bis f₁ + Δf₁/2 und andererseits im Frequenzbereich von f₃ - Δf₃/2 bis f₃ + Δf₃/2.

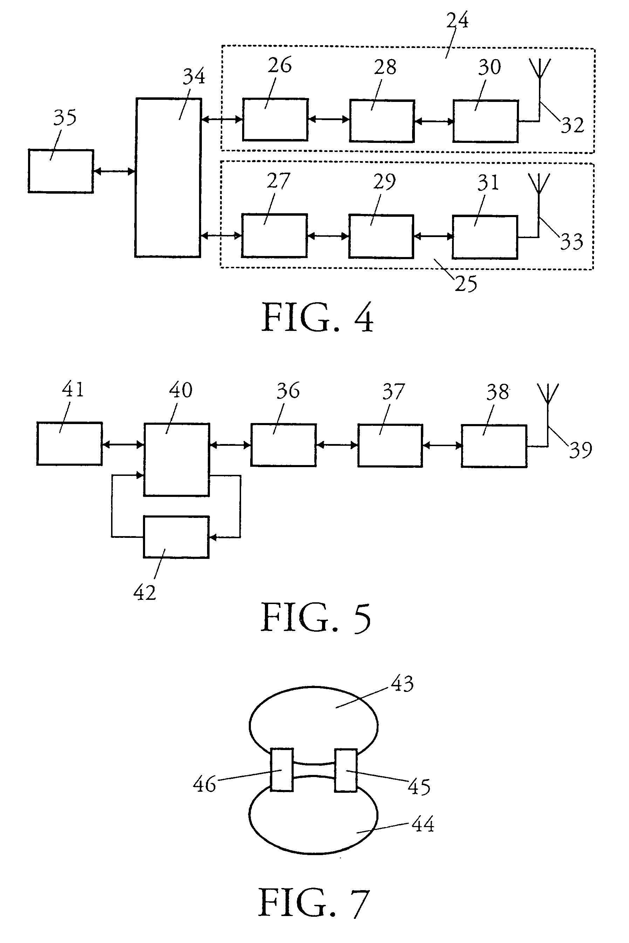

Ein Blockschaltbild eines ersten Ausführungsbeispiel eines Brücken-Terminals ist in Fig. 4 gezeigt. Das Brücken-Terminal enthält einen ersten Funkschaltungszweig 24 zur Kommunikation mit den Terminals eines ersten Sub-Netzwerks und einen zweiten Funkschaltungszweig 25 zur Kommunikation mit den Terminals eines zweiten Sub-Netzwerks. Die Funkschaltungszweige 24 und 25, die eine Funkvorrichtung bilden, enthalten jeweils eine Protokollvorrichtung 26 bzw. 27, jeweils ein Modem 28 bzw. 29 und jeweils eine Hochfrequenzschaltung 30 bzw. 31 mit jeweils einer Antenne 32 bzw. 33. Eine Funkschaltvorrichtung 34 ist einerseits mit den beiden Funkschaltungszweigen 24 und 25 und andererseits mit einer Verbindungskontrollvorrichtung 35 gekoppelt. Eine oder mehrere Stationen, welche mit der Verbindungskontrollvorrichtung 35 verbunden sind, sind in der Fig. 4 nicht dargestellt. Über die Antenne 32 des Funkschaltungszweiges 24 werden Daten in einem ersten Kanalbündel und über die Antenne 33 des Funkschaltungszweiges 25 Daten in einem zweiten Kanalbündel abgestrahlt.

Daten, die von der Verbindungskontrollvorrichtung 35 kommen, werden von der Funkschaltvorrichtung 34 in Abhängigkeit von Adreßinformationen zur Protokollvorrichtung 26 und/oder 27 geleitet. Des weiteren führt die Funkschaltvorrichtung 34 Daten von einer Protokollvorrichtung 26 oder 27 zur Verbindungskontrollvorrichtung 35 und/oder zur jeweils anderen Protokollvorrichtung 26 oder 27. Wenn an die Verbindungskontrollvorrichtung 35 wenigstens eine Station angeschlossen ist, dient das Brücken-Terminal nicht nur zum Austausch von Daten zwischen zwei Sub-Netzwerken, sondern arbeitet auch als normales Terminal. Der Vorteil dieses ersten Ausführungsbeispiels ist, daß mit den Sub-Netzwerken jederzeit Daten ausgetauscht werden können.

Es ist auch möglich, daß ein Brücken-Terminal mehr als zwei Funkschaltungszweige 24 und 25 enthält und zwar dann, wenn das Brücken-Terminal mehr als zwei Sub-Netzwerke verbindet. Die Anzahl der Funkschaltungszweige entspricht dann der Anzahl der zu verknüpfenden Sub-Netzwerke.

Ein Blockschaltbild eines zweiten Ausführungsbeispiels eines Brücken-Terminals ist in Fig. 5 dargestellt. Die Funkschaltvorrichtung dieses Brücken-Terminals enthält jeweils nur eine einzige Protokollvorrichtung 36, ein einziges Modem 37 und eine einzige Hochfrequenzschaltung 38 mit Antenne 39. Mit der Protokollvorrichtung 36 ist eine Funkschaltvorrichtung 40 verbunden, die des weiteren an eine Verbindungskontrollvorrichtung 41 und einer Zwischenspeichervorrichtung 42 angeschlossen ist. Die Zwischenspeichervorrichtung 42 enthält in dieser Ausführungsform ein Speicherelement und dient zur Zwischenspeicherung von Daten und ist als FIFO-Baustein realisiert (First In First Out), d.h. die Daten werden in der Reihenfolge aus der Zwischenspeichervorrichtung 42 gelesen, in der sie eingeschrieben worden sind. Das in Fig. 5 dargestellte Terminal kann ebenfalls als normales Terminal arbeiten. An die Verbindungskontrollvorrichtung 41 angeschlossene Stationen, die nicht in Fig. 5 eingezeichnet sind, liefern dann über die Verbindungskontrollvorrichtung 41 Daten zur Funkschaltvorrichtung 40.

Das Brücken-Terminal nach der Fig. 5 ist abwechselnd mit einem ersten und zweiten Sub-Netzwerk synchronisiert. Unter Synchronisation wird der gesamte Prozeß der Einbindung eines Terminals im Sub-Netzwerks bis zum Austausch von Daten verstanden. Wenn das Brücken-Terminal mit dem ersten Sub-Netzwerk synchronisiert ist, kann es Daten mit allen Terminals und mit dem Controller dieses ersten Sub-Netzwerks austauschen. Werden von der Verbindungskontrollvorrichtung 41 Daten an die Funkschaltvorrichtung 40 geliefert, deren Bestimmungsort ein Terminal oder der Controller des ersten Sub-Netzwerks oder ein Terminal oder Controller eines anderen Sub-Netzwerks ist, die über das erste Sub-Netzwerk zu erreichen sind, leitet die Funkschaltvorrichtung diese Daten direkt an die Protokollvorrichtung 36 weiter. In der Protokollvorrichtung 36 werden die Daten solange zwischengespeichert, bis der vom Controller bestimmte Zeitabschnitt für die Übertragung erreicht ist. Wenn die von der Verbindungskontrollvorrichtung 41 ausgegebenen Daten zu einem Terminal oder dem Controller des zweiten Sub-Netzwerks oder zu einem anderen über das zweite Sub-Netzwerk zu erreichenden Sub-Netzwerk gesendet werden sollen, muß die Funkübertragung bis zu dem Zeitabschnitt verzögert werden, in dem das Brücken-Terminal mit dem zweiten Sub-Netzwerk synchronisiert ist. Daher leitet die Funkschaltvorrichtung die Daten, deren Bestimmungsort im zweiten Sub-Netzwerk liegt oder deren Bestimmungsort über das zweite Sub-Netzwerk zu erreichen ist, zu der Zwischenspeichervorrichtung 42, welche die Daten solange zwischenspeichert, bis das Brücken-Terminal mit dem zweiten Sub-Netzwerk synchronisiert ist.

Wenn Daten von einem Terminal oder dem Controller des ersten Sub-Netzwerks vom Brücken-Terminal empfangen werden und deren Bestimmungsort ein Terminal oder der Controller des zweiten Sub-Netzwerks oder ein Terminal oder Controller eines anderen über das zweite Sub-Netzwerk zu erreichenden Sub-Netzwerks ist, werden diese Daten ebenfalls bis zur Synchronisation mit dem zweiten Sub-Netzwerk in der Zwischenspeichervorrichtung 42 abgelegt. Daten, deren Bestimmungsort eine Station des Brücken-Terminals ist, werden direkt über die Funkschaltvorrichtung 40 zur Verbindungskontrollvorrichtung 41 gegeben, die dann die empfangenen Daten zu der gewünschten Station leitet. Daten, deren Bestimmungsort weder eine Station des Brücken-Terminals noch ein Terminal oder Controller des zweiten Sub-Netzwerks ist, werden von der Funkschaltvorrichtung 40 gelöscht. Auch Daten, die nicht über das zweite Sub-Netzwerk weitergeleitet werden sollen, werden gelöscht.

Nach dem Synchronisationswechsel des Brücken-Terminals vom ersten zum zweiten Sub-Netzwerk werden die in der Zwischenspeichervorrichtung 42 befindlichen Daten in der Einschreibreihenfolge wieder aus der Zwischenspeichervorrichtung 42 gelesen. Anschließend können während der Dauer der Synchronisation des Brücken-Terminals mit dem zweiten Sub-Netzwerk alle Daten, deren Bestimmungsort ein Terminal oder der Controller des zweiten Sub-Netzwerks oder ein anderes über das zweite Sub-Netzwerk zu erreichende Sub-Netzwerk ist, sofort von der Funkschaltvorrichtung 40 zur Protokollvorrichtung 36 weitergegeben und nur die Daten, deren Bestimmungsort ein Terminal oder der Controller des ersten Sub-Netzwerks oder ein anderes über das erste Sub-Netzwerk zu erreichende Sub-Netzwerk ist, in der Zwischenspeichervorrichtung 42 gespeichert werden.

Es ist nicht unbedingt erforderlich, daß erst Daten, die für Terminals oder den Controller des ersten Sub-Netzwerks bestimmt sind, dann in der Zwischenspeichervorrichtung 42 zu speichern, wenn alle anderen Daten ausgelesen sind. In der Protokollvorrichtung 36 werden die Daten bis zu dem zur Übertragung vorgesehenen Zeitabschnitt zwischengespeichert.

Die Zwischenspeicherung der Daten für das erste Sub-Netzwerk kann schon während des Ausleseprozesses der Daten für das zweite Sub-Netzwerk erfolgen. Es muß nur sichergestellt werden, daß die neu gespeicherten Daten für das erste Sub-Netzwerk solange zwischengespeichert werden, bis das Brücken-Terminal mit dem ersten Sub-Netzwerk synchronisiert ist. Wenn das Brücken-Terminal mit dem ersten Sub-Netzwerk verbunden ist, ist ebenfalls eine Zwischenspeicherung der für das zweite Sub-Netzwerk bestimmten Daten möglich, während der Ausleseprozeß aus der Zwischenspeichervorrichtung 42 für die Daten des ersten Sub-Netzwerks andauert.

Die Kenntnis der Funkschaltvorrichtung 40 (oder auch der Funkschaltvorrichtung 34 in der Fig. 4) über den Bestimmungsort von empfangenen Daten wird z.B. aus Adreßinformationen aus den Daten entnommen. Diese Adreßinformation ist beispielsweise die Identifikationsnummer eines Terminals. Wenn der Bestimmungsort von in der Funkschaltvorrichtung 40 eintreffenden Daten eine Station des Brücken-Terminals oder ein Terminal oder Controller eines Sub-Netzwerks ist, greift die Funkschaltvorrichtung beispielsweise auf Vergleichsdaten zurück, die in einem mit der Funkschaltvorrichtung verbundenem Tabellenspeicher abgelegt sind. Hier sind Vergleichsdaten enthalten, aus welchen die Funkschaltvorrichtung entnimmt, wohin empfangene Daten weitergeleitet werden sollen. Nach einer Registrierung eines Terminals in einem Sub-Netzwerk wird von dem Terminal eine Verteil-Nachricht (Broadcast message) ausgesendet, in der die Identifikationsnummer des Terminals enthalten ist. Ein diese Verteil-Nachricht empfangendes Brücken-Terminal speichert in dem Tabellenspeicher die Identifikationsnummer und z.B. eine Nummer zur Kennzeichnung des mit dem Brücken-Terminal verbundenen Sub-Netzwerks, von dem die Verteil-Nachricht kommt. Daten, die beispielsweise von einem anderen Sub-Netzwerk dem Brücken-Terminal geliefert werden und die als Adreßinformation die Identifikationsnummer des Terminals aufweisen, werden dann an das Sub-Netzwerk geleitet, von welchem die Verteil-Nachricht stammt.

Der Tabellenspeicher enthält außerdem Vergleichsdaten von der Verbindungskontrollvorrichtung 41 für die am Brücken-Terminal angeschlossenen Stationen, damit bestimmte eintreffende Daten zur Verbindungskontrollvorrichtung des Brücken-Terminals geliefert werden können. Ein Brücken-Terminal, welches die Verteil-Nachricht erhält, muß diese Verteil-Nachricht noch an das jeweilige andere Sub-Netzwerke weiterleiten.

Nach Eintreffen von Daten in der Funkschaltvorrichtung 40 werden die Adreßinformationen der Daten mit den Vergleichsdaten vergleichen. In Abhängigkeit von dem Vergleich führt die Funkschaltvorrichtung entsprechende Schaltvorgänge durch. Beispielsweise sollen Daten von dem Terminal 14 des Sub-Netzwerks 3 der Fig. 1 über das Brücken-Terminal 5, das Sub-Netzwerk 1 und das Brücken-Terminal 4 zum Terminal 11 gelangen. Das Brücken-Terminal 5 muß Vergleichsdaten in seinem Tabellenspeicher enthalten, die angeben, daß die Daten über das Sub-Netzwerk 1 zum Sub-Netzwerk 2 gelangen sollen. Solche Vergleichsdaten sind z.B. in den Brücken-Terminals 4 und 5 gespeichert worden, nachdem das Terminal 14 in dem Sub-Netzwerk 3 registriert worden ist. Das Terminal 14 sendet eine Verteil-Nachricht nach der Registrierung, in der die Identifikationsnummer des Terminals angegeben ist. Wenn die Brücken-Terminals 4 und 5 diese Verteil-Nachricht erhalten, muß es Vergleichsdaten für dieses Terminal in dem Tabellenspeicher ablegen. Anschließend wird diese Verteil-Nachricht von den Brücken-Terminals 4 bzw. 5 weitergeleitet und somit über das gesamte lokale Netzwerk verteilt. Empfängt ein Terminal oder Controller eine solche Verteil-Nachricht wird diese gelöscht. Die Verteil-Nachricht wird noch durch Hinzufügung der Identifikationsnummer des die Verteil-Nachricht passierenden Brücken-Terminals ergänzt. Hierdurch wird erreicht, das ein Brücken-Terminal, das die Verteil-Nachricht eines Terminals zum zweiten Mal erreicht, diese Verteil-Nachricht nicht weiter verarbeiten muß, sondern diese löscht.

Der Vorteil, nur einen Funkschaltungszweig mit Protokollvorrichtung 36, Modem 37 und Hochfrequenzschaltung 38 für ein Brücken-Terminal zu verwenden, besteht einerseits darin, einen weiteren Funkschaltungszweig mit kostenintensiven Bauteilen und andererseits der Einsatz von Filtern zur Unterdrückung des Nebensprechens von zwei Funkschaltungszweigen zu vermeiden. Falls das Brücken-Terminal mit einem Funkschaltungszweig mehr als zwei Sub-Netzwerke verbinden soll, sind weitere Speicherelemente in der Zwischenspeichervorrichtung erforderlich und es müssen weitere Zeitabschnitte vorgesehen sein, zur Synchronisation mit einem Sub-Netzwerk. Wenn das Brücken-Terminal M Sub-Netzwerke verbinden soll (M ∈ 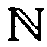 , M ≥ 2), dann muß die Anzahl der Speicherelemente in der Zwischenspeichervorrichtung und die Anzahl der Zeitabschnitte mindestens M - 1 sein. Vorteilhaft wäre die Anzahl der Speicherelemente gleich M zu setzen, damit bei einem Wechsel der Verbindung von zwei Sub-Netzwerken die Daten immer in dasselbe Speicherelement geschrieben werden. Hiermit vereinfacht sich dann die Steuerung des Einschreib- und Ausleseprozesses in bzw. aus den Speicherelementen der Zwischenspeichervorrichtung.

Wenn alle zwei Sub-Netzwerke verbindenden Brücken-Terminals im lokalen Netzwerk so verteilt sind, daß keine Schleifenbildung vorliegt, kann die Weiterleitung der Daten in einem Brücken-Terminal vereinfacht werden. Eine Schleife bedeutet, daß ein Sub-Netzwerk immer von mehreren Brücken-Terminals Daten eines anderen Sub-Netzwerks erhalten kann. Wenn das Brücken-Terminal Daten von einem Terminal oder dem Controller eines ersten Sub-Netzwerks empfängt und deren Bestimmungsort über das zweite Sub-Netzwerk zu erreichen ist, werden von der Funkschaltvorrichtung 34 oder 40 direkt (Ausführungsbeispiel nach Fig. 4) oder nach Zwischenspeicherung (Ausführungsbeispiel nach Fig. 5) in das zweite Sub-Netzwerks gesendet. Von einem Terminal oder dem Controller des ersten Sub-Netzwerks gesendete Daten, deren Bestimmungsort eine Station des Brücken-Terminals ist, werden von der Funkschaltvorrichtung 34 oder 40 zur Verbindungskontrollvorrichtung 35 oder 41 gegeben und von dieser zu der gewünschten Station geleitet. Von einem Terminal oder dem Controller des ersten Sub-Netzwerks empfangene Daten, deren Bestimmungsort ein Terminal oder Controller des ersten Sub-Netzwerks ist oder die nicht vom Brücken-Terminal weiterzuleiten sind, werden von der Funkschaltvorrichtung gelöscht.

Empfängt das Brücken-Terminal Daten von einem Terminal oder dem Controller des zweiten Sub-Netzwerks, deren Bestimmungsort über das erste Sub-Netzwerk zu erreichen ist, werden diese Daten direkt (Ausführungsbeispiel nach Fig. 4) oder nach Zwischenspeicherung (Ausführungsbeispiel nach Fig. 5) in das erste Sub-Netzwerk gesendet. Von einem Terminal oder dem Controller des zweiten Sub-Netzwerks gesendete Daten, deren Bestimmungsort eine Station des Brücken-Terminals ist, werden von der Funkschaltvorrichtung 34 oder 40 zur Verbindungskontrollvorrichtung 35 oder 41 gegeben und von dieser zu der gewünschten Station geleitet. Von einem Terminal oder dem Controller des zweiten Sub-Netzwerks empfangene Daten, deren Bestimmungsort ein Terminal oder der Controller des zweiten Sub-Netzwerks ist und die nicht von dem Brücken-Terminal weiterzuleiten sind, werden von der Funkschaltvorrichtung gelöscht.

Ein Brücken-Terminal, das nur zwei Sub-Netzwerke verbindet und das in einem lokalen Netzwerk ohne Schleifenbildung eingebunden ist, benötigt für die Weiterleitung von Daten keine zusätzliche Signalisierungsinformation. Ist der Bestimmungsort von Daten über das Sub-Netzwerk zu erreichen, von dem die Daten stammen, werden diese Daten gelöscht. Daten, deren Bestimmungsort über das jeweilige andere Sub-Netzwerk zu erreichen ist, werden zu dem anderen Sub-Netzwerk weitergeleitet. Das bedeutet, das ein Brücken-Terminal nur wissen muß, über welches der beiden verbundenen Netzwerke der Empfänger der Daten zu erreichen ist. Kenntnisse über den tatsächlichen Bestimmungsort des Empfängers und die Übertragungswege zu diesem Bestimmungsort sind nicht erforderlich.

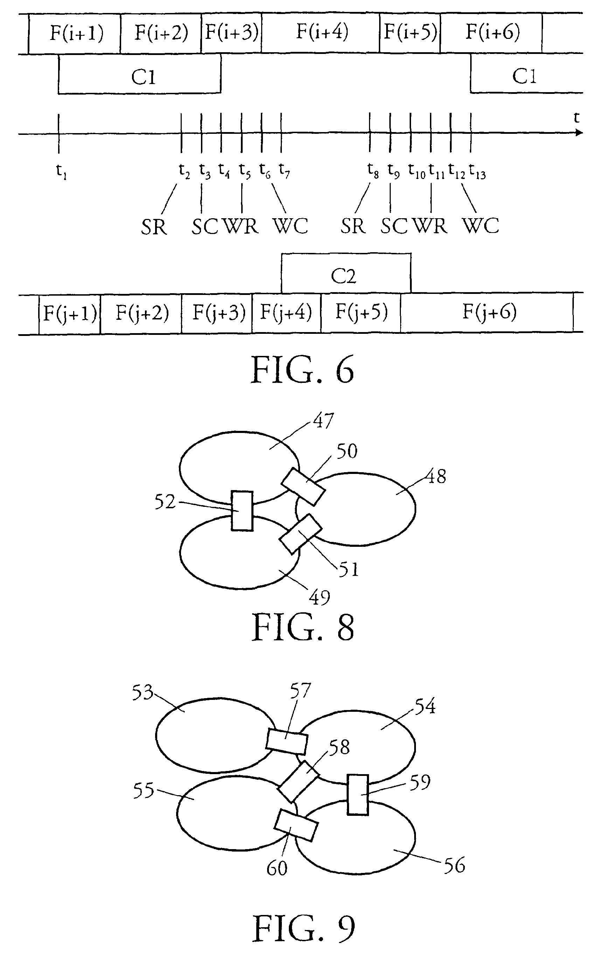

Anhand der Fig. 6 wird im folgenden der zeitliche Ablauf der Synchronisation eines Brücken-Terminals nach Fig. 5 mit einem ersten und zweiten Sub-Netzwerk erläutert. Der zeitliche Ablauf ist dabei auf Rahmen der MAC-Schicht (MAC-Rahmen) des ersten und zweiten Sub-Netzwerks bezogen. Die aufeinanderfolgenden MAC-Rahmen des ersten Sub-Netzwerks sind in Fig. 6 mit F(i + 1), F(i + 2), ... , F(i + 6) und die des zweiten Sub-Netzwerks mit F(j + 1), F(j + 2), ... , F(j + 6) bezeichnet. Die Zeitdauer der Synchronisation oder Verbindung des Brücken-Terminals mit dem ersten Sub-Netzwerk wird mit C1 und die Zeitdauer der Synchronisation oder Verbindung mit dem zweiten Sub-Netzwerk mit C2 bezeichnet. Die jeweiligen Rahmen F(i + 1), F(i + 2), ... , F(i + 6) und F(j + 1), F(j + 2), ... , F(j + 6) können von unterschiedlicher Dauer sein.

Verschiedene Zeitpunkte t₁, t₂, ... , t₁₃ sind auf einer Zeitachse t eingetragen. In dem Beispiel nach der Fig. 6 beginnt die Synchronisation oder Verbindung des Brücken-Terminals zum Zeitpunkt t₁ während des Rahmens F(i + 1) und endet zu einem Zeitpunkt t₄ während des Rahmens F(i + 3). Während dieses Zeitabschnittes, vom Zeitpunkt t₁ bis zum Zeitpunkt t₄, ist für das erste Sub-Netzwerk das Brücken-Terminal in einem Aktivmodus und für das zweite Sub-Netzwerk das Brücken-Terminal in einem Schlafmodus. Während des Schlafmodus besteht keine Verbindung des Brücken-Terminals zu einem Sub-Netzwerk. Bevor der Aktivmodus mit dem ersten Sub-Netzwerk beendet wird, sendet das Brücken-Terminal zum Zeitpunkt t₂ (t₂ < t₄) eine Schlafwunsch-Nachricht SR (sleep request message) zum Controller des ersten Sub-Netzwerks. In dieser Schlafwunsch-Nachricht SR ist ein Vorschlag für den Zeitpunkt des Beginns des Schlafmodus bzw. des Endes des Aktivmodus (Zeitpunkt t₄) und eine Angabe für die Dauer des Schlafmodus enthalten. Der Controller des ersten Sub-Netzwerks bestätigt zu einem Zeitpunkt t₃ (t₂ < t₃ < t₄) den Schlafwunsch durch Aussendung einer Schlafbestätigungs-Nachricht SC (sleep confirmation message). In der Schlafbestätigungs-Nachricht SC ist der genaue Zeitpunkt des Beginns des Schlafmodus angegeben. Hierbei wird die Startzeit t₄ des Schlafmodus des Brücken-Terminals für das erste Sub-Netzwerk von dem Controller bestätigt.

Nach dem Zeitpunkt t₄ versucht das Brücken-Terminal sich mit dem zweiten Sub-Netzwerk zu synchronisieren. Die Synchronisation wird dabei über den Controller des zweiten Sub-Netzwerks durchgeführt. Hierbei erhält das Brücken-Terminal von dem Controller des zweiten Sub-Netzwerks alle erforderlichen System- und Synchronisationsinformationen, um einen Datenaustausch mit den Terminals des zweiten Sub-Netzwerks durchführen zu können. Nach der Synchronisation sendet das Brücken-Terminal zu einem Zeitpunkt t₅ während des Rahmens F(j + 3) des zweiten Sub-Netzwerks eine Weckwunsch-Nachricht WR (wake-up request message) an den Controller des zweiten Sub-Netzwerks. Diese Weckwunsch-Nachricht WR enthält einen Vorschlag für den Beginn des Aktivmodus des Brücken-Terminals mit dem zweiten Sub-Netzwerk und eine Angabe für die Dauer des Aktivmodus. Der Controller antwortet auf diese Weckwunsch-Nachricht WR zu einem Zeitpunkt t₆ mit einer Weckbestätigungs-Nachricht WC (wake-up confirmation message), in welcher der genaue Zeitpunkt des Beginns des Aktivmodus angegeben ist. Zu einem Zeitpunkt t₇ (t₆ < t₇) beginnt der Aktivmodus des Brücken-Terminals mit dem zweiten Sub-Netzwerk und somit ggf. der Datenaustausch mit den Terminals des zweiten Sub-Netzwerks.

Der oben beschriebene Prozeß für die Beendigung des Aktivmodus des ersten Sub-Netzwerks bzw. den Beginn des Schlafmodus des Brücken-Terminals mit dem zweiten Sub-Netzwerk wird zum Zeitpunkt t₈ dann auch mit einer Schlafwunsch-Nachricht SR für das zweite Sub-Netzwerk durchgeführt. Zum Zeitpunkt t₉ erhält das Brücken-Terminal eine Schlafbestätigungs-Nachricht vom Controller des zweiten Sub-Netzwerks und der Aktivmodus des Brücken-Terminals mit dem zweiten Sub-Netzwerk endet zum Zeitpunkt t₁₀. Anschließend synchronisiert sich das Brücken-Terminal wieder mit dem Controller des ersten Sub-Netzwerks und sendet nach der Synchronisation zum Zeitpunkt t₁₁ eine Weckwunsch-Nachricht WR zum Controller des ersten Sub-Netzwerks. Zum Zeitpunkt t₁₂ empfängt das Brücken-Terminal die Weckbestätigungs-Nachricht WC und startet die Kommunikation mit den Terminals des ersten Sub-Netzwerks zum Zeitpunkt t₁₃.

Für die Bildung der verschiedenen Nachrichten ist z.B. eine als Mikroprozessor ausgebildete Steuervorrichtung in der Protokollvorrichtung 36 vorgesehen. Die Protokollvorrichtung 36 ist, wie oben schon erwähnt, für die MAC- und LLC-Schicht und ggf. für weitere Steuerungsvorgänge des Funkübertragungsmediums verantwortlich (vgl. DE 196 39 845 C1).

In den vorhergehenden Absätzen ist der Aufbau eines lokalen Netzwerks mit mehreren Sub-Netzwerken und eines die verschiedenen Sub-Netzwerke verbindenden Brücken-Terminals erläutert worden. Im folgenden wird die automatische Konfigurierung eines oder mehrerer Brücken-Terminals beschrieben, die ihren Betrieb in einem lokalen Netzwerk aufnehmen.

Nimmt ein Brücken-Terminal den Betrieb in einem lokalen Netzwerk mit mehr als zwei Sub-Netzwerken auf, so ist entweder erforderlich zu bestimmen, welche Sub-Netzwerke das Brücken-Terminal verbinden soll, oder es ist eine automatische Konfigurierung zu starten. Bei der automatischen Konfigurierung prüft das Brücken-Terminal zuerst, welche Sub-Netzwerke erreichbar sind und welche Kanalbündel die erreichbaren Sub-Netzwerke benutzen. Unter der Benutzung eines Kanalbündels in einem Sub-Netzwerk wird die Verwendung eines bestimmten Kanalbündels von den Terminals und dem Controller dieses Sub-Netzwerks zur Übertragung von Daten verstanden. Für jedes verfügbare Kanalbündel im lokalen Netzwerk prüft das Brücken-Terminal die Empfangsqualität. Das bedeutet, daß das Brücken-Terminal versucht, sich mit einem Controller eines Sub-Netzwerks zu synchronisieren. Hierbei werden nach der Synchronisation von der Hochfrequenzschaltung und vom Modem demodulierte Kontrolldaten des Controllers von der Protokollvorrichtung des Brücken-Terminals decodiert und zur Qualitätsprüfung ausgewertet.

Alle von den Sub-Netzwerken benutzten Kanalbündel werden als aktive Kanalbündel k₁, k₂, ... , kₚ bezeichnet. Die Protokollvorrichtung des Brücken-Terminals, das zwei Sub-Netzwerke verbinden soll, erstellt eine Liste mit allen möglichen aktiven Kanalbündelpaaren (kᵢ, kⱼ), wobei kᵢ ≠ kⱼ ist. Sind z.B. vier aktive Kanalbündel k₁, k₂, k₃ und k₄ detektiert worden, werden die Kanalbündelpaare (k₁, k₂), (k₁, k₃), (k₁, k₄), (k₂, k₃), (k₂, k₄) und (k₃,k₄) gebildet. Diese Kanalbündelpaare werden dann nach einem bestimmten Kriterium sortiert. Beispielsweise kann für jedes Kanalbündelpaar die Summe der empfangenen Energiedurchschnittswerte der zugeordneten Sub-Netzwerke gebildet werden. Dabei wird von dem Modem für jedes Datenbit die ermittelte Energie gemessen und an die Protokollvorrichtung geliefert, welche nach Empfang von mehreren Bits deren Energiedurchschnittswert berechnet.

Die Kanalbündelpaare werden entsprechend der Abnahme der berechneten Summe sortiert. Das bedeutet, daß das erste Kanalbündelpaar eine größere Summe als das zweite Kanalbündelpaar aufweist, das zweite Kanalbündelpaar eine größere Summe als das dritte Kanalbündelpaar usw. Es ist auch möglich für jedes Kanalbündelpaar die Empfangsqualität einer vom Controller gesendeten Kontrollnachricht der zugeordneten Sub-Netzwerke zu bestimmen und die Kanalbündelpaare entsprechend der Abnahme der Empfangsqualität zu sortieren. Die Empfangsqualität läßt sich z.B. von der Protokollvorrichtung anhand der Bitfehlerrate des empfangenen Signals bestimmen. Solche Bitfehlermessungen werden in den heute bekannten Terminals bei der Kanalcodierung durchgeführt. Das Brücken-Terminal verbindet dann die beiden Sub-Netzwerke mit den Kanalbündeln des ersten Kanalbündelpaares der sortierten Liste.

Wie oben erwähnt, kann ein Brücken-Terminal eine automatische Konfigurierung vornehmen, um zu bestimmen, welche Sub-Netzwerke verbunden werden sollen. Als weitere Möglichkeit ist vorgesehen, daß fest vorgegeben ist, welche Sub-Netzwerke ein Brücken-Terminal verbindet. Nach der Inbetriebnahme eines Brücken-Terminals nach einer der beiden angegebenen Methoden (automatische Konfigurierung oder Festlegung) kann des weiteren noch geprüft werden, ob im gesamten lokalen Netzwerk eine Schleife gebildet worden ist. Wie oben erwähnt, bedeutet eine Vermeidung von Schleifen, daß ein Sub-Netzwerk von einem anderen Sub-Netzwerk immer nur von einem bestimmten Brücken-Terminal Daten erhalten darf. In den Fig. 7, 8 und 9 sind jeweils lokale Netzwerke mit mehreren Sub-Netzwerken dargestellt, die Schleifen enthalten. Fig. 7 zeigt zwei Sub-Netzwerke 43 und 44, die über zwei Brücken-Terminals 45 und 46 verbunden sind. Die Brücken-Terminals 45 und 46 verbinden jeweils zwei Sub-Netzwerke. Bei diesem lokalen Netzwerk können Daten zwischen den Sub-Netzwerken 43 und 44 über beide Brücken-Terminals 45 und 46 übertragen werden. Es wird also eine Schleife zwischen den Sub-Netzwerken 43 und 44 gebildet.

In Fig. 8 ist ein lokales Netzwerk mit drei Sub-Netzwerken 47 bis 49 dargestellt. Ein Brücken-Terminal 50 verbindet die Sub-Netzwerke 47 und 48, ein Brücken-Terminal 51 verbindet die Sub-Netzwerke 48 und 49 und ein Brücken-Terminal 52 die Sub-Netzwerke 47 und 49. Bei diesem lokalen Netzwerk kann beispielsweise das Sub-Netzwerk 47 Daten vom Sub-Netzwerk 48 über das Brücken-Terminal 50 oder die Brücken-Terminals 51 und 52 und das Sub-Netzwerk 49 erhalten.

Fig. 9 zeigt vier Sub-Netzwerke 53 bis 56. Das Sub-Netzwerk 53 ist mit dem Sub-Netzwerk 54 über das Brücken-Terminal 57 und das Sub-Netzwerk 54 über das Brücken-Terminal 58 mit dem Sub-Netzwerk 55 und über das Brücken-Terminal 59 mit dem Sub-Netzwerk 56 verbunden. Ein Brücken-Terminal 60 verbindet noch die Sub-Netzwerke 55 und 56. Auch bei diesem lokalen Netzwerk der Fig. 9 wird mit den Brücken-Terminals 58 bis 60 eine Schleife gebildet.

Würde eine solche Schleifenbildung zugelassen, dann gäbe es keine eindeutigen Übertragungswege zwischen einem Daten aussendenden Terminal und einem Daten empfangenden Terminal. In diesem Fall müßten dann Informationen über die Übertragungswege für jeden Empfänger vorgesehen sein. Beispielsweise müßte im lokalen Netzwerk nach Fig. 8 festgelegt sein, daß ein Terminal des Sub-Netzwerks 47 seine Daten über das Brücken-Terminal 50 zu einem Terminal des Sub-Netzwerks 48 überträgt und nicht über die Brücken-Terminals 51 und 52 und das Sub-Netzwerk 49 zu dem Terminal des Sub-Netzwerks 48. Diese zusätzliche Informationsermittlung läßt sich aber vermeiden, wenn keine Schleifen gebildet werden.

Im folgenden wird beschrieben, wie festgestellt wird, ob z.B. nach der Wahl eines Kanalbündelpaares (kᵢ, kⱼ) und der dadurch entstehenden Verbindung der Sub-Netzwerke mit den Kanalbündeln kᵢ und kⱼ über das zu prüfende Brücken-Terminal eine Schleife gebildet worden ist. Das zu prüfende Brücken-Terminal (Prüfung führt eine Protokollvorrichtung 36 durch) sendet eine Schleifentest-Nachricht (loop test message) zu beiden Sub-Netzwerken, mit denen das zu prüfende Brücken-Terminal verbunden ist. Die Schleifentest-Nachricht enthält eine das zu prüfende Brücken-Terminal kennzeichnende Identifikationsnummer ID und einen Subnetz-Zählerwert HC, welcher auf 0 gesetzt ist. Nach Aussendung der Schleifentest-Nachricht wird ein Zeitzähler TC gestartet.

Eine Schleifentest-Nachricht wird nur von einem Brücken-Terminal weiterverarbeitet. Wenn ein Brücken-Terminal eine Schleifentest-Nachricht erhält, die nicht die Identifikationsnummer des die Schleifentest-Nachricht empfangenden Brücken-Terminals aufweist, inkrementiert das Brücken-Terminal den Subnetz-Zählerwert HC (HC = HC + 1) und prüft, ob der sich ergebende Subnetz-Zählerwert HC einen gespeicherten Systemparameter TS überschreitet. Der gespeicherte Systemparameter HC gibt die maximal erlaubte Anzahl von Sub-Netzwerken des lokalen Netzwerks an. Wenn der Subnetz-Zählerwert HC größer als der Systemparameter TS (HC > TS) ist, wird die Schleifentest-Nachricht gelöscht, um das lokale Netzwerk nicht unnötig mit eventuell verfälschten Nachrichten zu belasten. Im anderen Fall wird die Schleifentest-Nachricht zu dem anderen Sub-Netzwerk des Brücken-Terminals geliefert. Mit Hilfe des Subnetz-Zählerwertes HC wird vermieden, daß eine Schleifentest-Nachricht aufgrund einer Nachrichtenverfälschung durch Übertragungsfehler ewig im lokalen Netzwerk kreist.

Wenn ein Brücken-Terminal seine eigene ausgesendete Schleifentest-Nachricht empfängt, d.h. die Schleifentest-Nachricht enthält die Identifikationsnummer des Brücken-Terminals, liegt eine Schleife vor.

Wird die automatische Konfigurierung eines Brücken-Terminals, das seinen Betrieb im lokalen Netzwerk aufnimmt, unter der Bedingung durchgeführt, daß keine Schleife vorliegt, ist die Konfigurierung nicht beendet, wenn eine Schleife gefunden worden ist. Dann muß die automatische Konfigurierung zur Findung von zwei Kanalbündeln mit dem nächsten Paar in der Liste durchgeführt werden.

Wenn dem zu prüfenden Brücken-Terminal eine ausgesendete Schleiftest-Nachricht innerhalb einer bestimmten Zeit nicht wieder zugeführt wird, d.h. der Zeitzähler TC überschreitet einen vorgegebenen Wert, stellt das zu prüfende Terminal fest, daß keine Schleife vorliegt. Aus Zuverlässigkeitsgründen kann der Schleifentest mehrmals nach zufälligen Zeitintervallen durchgeführt werden. Nur wenn alle Tests erfolgreich sind, ist die Konfigurierung beendet.

Wenn also festgestellt worden ist, daß ein Schleifentest nicht erfolgreich gewesen ist, wird das nächste Kanalbündelpaar der sortierten Liste ausgewählt und der Schleifentest hierfür durchgeführt. Dies wird solange durchgeführt bis ein Schleifentest erfolgreich gewesen ist oder alle Kanalbündelpaare getestet worden sind. In diesem Fall kann das Brücken-Terminal nicht verwendet werden oder dessen Standort wird zum Start einer neuen automatischen Konfigurierung verschoben.

## Patentansprüche

1. Brücken-Terminal (4, 5) zur Übertragung von Daten zwischen Terminals (4-16) von wenigstens einem ersten und einem zweiten Sub-Netzwerk (1, 2, 3) eines lokalen Netzwerks über ein drahtloses Medium, wobei das Brücken-Terminal (4, 5) eine Zwischenspeichervorrichtung (42) enthält,
**dadurch gekennzeichnet, dass** das Brücken-Terminal (4) sowohl ein Teil des ersten Subnetzwerkes (1, 2) als auch ein Teil des zweiten Subnetzwerkes (2, 1) ist und abwechselnd mit den beiden Sub-Netzwerken (1, 2) zum Austausch von Daten verbunden ist, wobei die Zwischenspeichervorrichtung (42) zur Zwischenspeicherung von empfangenen Daten aus dem Subnetzwerk (1,2) vorgesehen ist, in dem das Brückenterminal (4) momentan arbeitet, wobei die Daten für Terminals (10-12, 5-9) aus einem anderen Subnetzwerk (2, 3) bestimmt sind.

2. Brücken-Terminal (4, 5) nach Anspruch 1, **dadurch gekennzeichnet, dass** das Brücken-Terminal (4, 5) zur Aussendung von in der Zwischenspeichervorrichtung (42) abgelegten Daten für ein Sub-Netzwerk (1, 2) in der Reihenfolge des Einschreibens nach Verbindung mit diesem Sub-Netzwerk (1, 2) und zur Zwischenspeicherung in der Zwischenspeichervorrichtung (42) von empfangenen Daten für ein nicht mit dem Brücken-Terminal verbundenes Sub-Netzwerk (3, 2, 1) vorgesehen ist.

3. Brücken-Terminal (4, 5) nach Anspruch 1,**dadurch gekennzeichnet, dass** das Brücken-Terminal (4, 5) zur Beendigung einer Verbindung mit einem Sub-Netzwerk (1, 2) nach Aussendung einer Schlafwunsch-Nachricht und Empfang einer Schlafbestätigungs-Nachricht von einem als Controller bezeichneten Terminal, das wenigstens für Managementfunktionen in diesem Sub-Netzwerk zuständig ist, und zum Beginn einer Verbindung mit einem anderen Sub-Netzwerk nach Aussendung einer Weckwunsch-Nachricht und Empfang einer Weckbestätigungs-Nachricht von einem Controller dieses anderen Sub-Netzwerks vorgesehen ist.

4. Brücken-Terminal (4, 5) nach Anspruch 1, **dadurch gekennzeichnet, dass** die Zwischenspeichervorrichtung (42) mindestens M - 1, wobei M eine natürliche Zahl größer oder gleich 2 ist, Speicherelemente enthält, wenn das Brücken-Terminal (4, 5) zum Datenaustausch mit M Sub-Netzwerken vorgesehen ist, und
dass jedes Speicherelement zur Zwischenspeicherung von Daten eines einzigen Sub-Netzwerks vorgesehen ist, welches nicht mit dem Brücken-Terminal verbunden ist.

5. Brücken-Terminal (4, 5) nach Anspruch 1,**dadurch gekennzeichnet, dass** eine Zwischenspeichervorrichtung (42) zur Speicherung von empfangenen Paketen vorgesehen ist.

6. Brücken-Terminal (4, 5) nach Anspruch 1,**dadurch gekennzeichnet, dass** ein Brücken-Terminal (4, 5) eine Funkvorrichtung (19) mit einer Hochfrequenzschaltung (21,30, 31, 38), einem Modem (22, 28, 29, 37) und einer Protokollvorrichtung (23, 26, 27, 36), eine Funkschaltvorrichtung (34, 40) und eine Verbindungskontrollvorrichtung(35, 41), die mit wenigstens einer Station gekoppelt ist, enthält und
dass die Funkschaltvorrichtung (34, 40) zum Datenaustausch mit der Verbindungskontrollvorrichtung(35, 41), der Funkvorrichtung (19) und der Zwischenspeichervorrichtung (42) vorgesehen ist.

7. Brücken-Terminal (4, 5) nach Anspruch 1, **dadurch gekennzeichnet, dass** die Sub-Netzwerke (1, 2, 3), mit welchen das Brücken-Terminal (4, 5) Daten austauscht, unterschiedliche Trägerfrequenzen aufweisen.

8. Lokales Netzwerk mit wenigstens einem Brücken-Terminal gemäß einem der Ansprüche 1 bis 7.

## Claims

1. A bridge terminal (4, 5) for transmitting data between terminals (4 - 16) of at least a first and a second subnetwork (1, 2, 3) in a local area network via a wireless medium, in which the bridge terminal (4, 5) includes a buffer store (42), **characterized in that** the bridge terminal (4) forms part of both the first subnetwork (1,2) and the second subnetwork (2, 1) and is alternately connected to the two subnetworks (1,2) for the exchange of data, the buffer store (42) being provided for buffering received data from the subnetwork (1, 2) in which the bridge terminal (4) is currently working, while the data for terminals (10 - 12, 5 - 9) are determined by another subnetwork (2, 3).

2. A bridge terminal (4, 5) as claimed in claim 1, **characterized in that** the bridge terminal (4, 5) is provided for transmitting data stored in the buffer store (42) for a subnetwork (1, 2) in the order in which they have been written after this subnetwork (1,2) has been connected to, and for buffering in the buffer store (42) received data for a subnetwork (3, 2, 1) that is not connected to the bridge terminal.

3. A bridge terminal (4, 5) as claimed in claim 1, **characterized in that** the bridge terminal (4, 5), for terminating a connection to a subnetwork (1, 2) after a sleep request message has been transmitted and a sleep confirmation message has been received from a terminal called controller that is responsible for at least management functions in this subnetwork, and for beginning a connection to another subnetwork after a wake-up request message has been transmitted and a wake-up confirmation message has been received from a controller of this other subnetwork.

4. A bridge terminal (4, 5) as claimed in claim 1, **characterized in that** the buffer store (42) contains at least M-1, where M is a natural number greater than or equal to 2, memory locations when the bridge terminal (4, 5) is arranged for exchanging data with M subnetworks, and **in that** each memory location is provided for buffering data of a single subnetwork that is not connected to the bridge terminal.

5. A bridge terminal (4, 5) as claimed in claim 1, **characterized in that** a buffer store (42) is provided for storing received packets.

6. A bridge terminal (4, 5) as claimed in claim 1, **characterized in that** a bridge terminal (4, 5) includes a radio device (19) with a high-frequency circuit (21, 30, 31, 38), a modem (22, 28, 29, 37) and a protocol device (23, 26, 27, 36), a radio switching device (34, 40) and a connection control device (35, 41) which is coupled to at least one station, and **in that** the radio switching device (34, 40) is provided for exchanging data with the connection control device (35, 41), the radio device (19) and the buffer store (42).

7. A bridge terminal (4, 5) as claimed in claim 1, **characterized in that** the subnetworks (1, 2, 3) with which the bridge terminal (4, 5) exchanges data have different carrier frequencies.

8. A local area network comprising at least one bridge terminal as claimed in any one of the claims 1 to 7.

## Revendications

1. Terminal de pont (4, 5) pour la transmission de données entre des terminaux (4-16) d'au moins un première et un deuxième sous-réseaux (1, 2, 3) d'un réseau local par l'intermédiaire d'un support sans fil, le terminal de pont (4, 5) contenant un dispositif de mémoire intermédiaire (42),
**caractérisé en ce que** le terminal de pont (4) contient à la fois une partie du premier sous-réseau (1, 2) et une partie du deuxième sous-réseau (2, 1) et est relié en alternance avec les deux sous-réseaux (1, 2) pour l'échange de données, le dispositif de mémoire intermédiaire (42) étant prévu pour l'enregistrement intermédiaire de données reçues à partir du sous-réseau (1, 2) dans lequel le terminal de pont (4) fonctionne instantanément, les données pour les terminaux (10-12, 5-9) étant déterminées à partir d'un autre sous-réseau (2, 3).

2. Terminal de pont (4, 5) selon la revendication 1, **caractérisé en ce que** le terminal de pont (4, 5) est prévu pour la transmission des données enregistrées dans le dispositif de mémoire intermédiaire (42) pour un sous-réseau (1, 2) dans l'ordre de l'enregistrement après la liaison avec ce sous-réseau (1, 2) et pour l'enregistrement intermédiaire dans le dispositif de mémoire intermédiaire (42) de données reçues pour un sous-réseau (3, 2? 1) non-relié au terminal de pont.

3. Terminal de pont (4, 5) selon la revendication 1, **caractérisé en ce que** le terminal de pont (4, 5) est prévu à la fin d'une liaison avec un sous-réseau (1, 2) après la transmission d'un message de demande de sommeil et la réception d'un message de confirmation de sommeil par un terminal désigné comme un contrôleur qui est compétent au moins pour les fonctions de gestion dans ce sous-réseau et au début d'une liaison avec un autre sous-réseau après la transmission d'un message de demande d'éveil et la réception d'un message de confirmation d'éveil par un contrôleur de cet autre sous-réseau.

4. Terminal de pont (4, 5) selon la revendication 1, **caractérisé en ce que** le dispositif de mémoire intermédiaire (42) contient au moins M éléments de mémoire, M. étant un nombre naturel supérieur ou égal à 2, lorsque le terminal de pont (4, 5) est prévu pour l'échange de données avec M sous-réseaux et que chaque élément de mémoire est prévu pour l'enregistrement intermédiaire de données d'un seul sous-réseau qui n'est pas relié au terminal de pont.

5. Terminal de pont (4, 5) selon la revendication 1, **caractérisé en ce qu'**un dispositif de mémoire intermédiaire (42) est prévu pour l'enregistrement de paquets reçus.

6. Terminal de pont (4, 5) selon la revendication 1, **caractérisé en ce qu'**un terminal de pont (4, 5) contient un dispositif radio (19) avec un circuit à haute fréquence (21, 30, 31, 38), un modem (22, 28, 29, 37) et un dispositif de protocole (23, 26, 27, 36), un dispositif de commutation radio (34, 40) et un dispositif de contrôle de liaison (35, 41) qui est couplé à au moins une station et
que le dispositif de commutation radio (34,40) est prévu pour l'échange de données avec le dispositif de contrôle de liaison (35,41), le dispositif radio (19) et le dispositif de mémoire intermédiaire (42).

7. Terminal de pont (4, 5) selon la revendication 1, **caractérisé en ce que** les sous-réseaux (1, 2, 3) avec lesquels le terminal de pont (4, 5) échange des données présentent différentes fréquences porteuses.

8. Réseau local avec au moins un terminal de pont conformément à l'une des revendications 1 à 7.
